# EUROPEAN PATENT APPLICATION

(11) **EP 4 513 939 A1**
(43) Date of publication of application: **26.02.2025**
(21) Application number: 23791192.0
(22) Date of filing: 17.04.2023
(51) Int. Cl.: H04W 16/28, H04W 52/02

(54) **INFORMATION TRANSMISSION METHOD, FIRST NODE, SECOND NODE, AND STORAGE MEDIUM**

(30) Priority: 21.04.2022 CN 202210421947
(71) Applicant: ZTE Corporation, Shenzhen, Guangdong 518057 (CN)
(72) Inventor: WU, Yiming, Shenzhen, Guangdong 518057 (CN); ZHANG, Wanchun, Shenzhen, Guangdong 518057 (CN); LI, Ping, Shenzhen, Guangdong 518057 (CN); CUI, Yijun, Shenzhen, Guangdong 518057 (CN)
(74) Representative: Savi, Massimiliano
(86) International application number: PCT/CN2023/088737
(87) International publication number: WO 2023/202537

(57) **Abstract**

Embodiments of the present application provide an information transmission method, a first node, a second node, and a storage medium. The method comprises: the first node sends a first beam control message to the second node, wherein the first beam control message at least comprises beam behavior information that is used for indicating a beam control behavior to be executed by the second node.

## Description

### CROSS-REFERENCE TO RELATED APPLICATION

This application is filed on the basis of Chinese patent application No. 202210421947.4 filed April 21, 2022, and claims priority to the Chinese patent application, the entire contents of which are incorporated herein by reference.

### TECHNICAL FIELD

The present disclosure relates to the technical field of communication, and more particularly, to an information transmission method, a first node, a second node, and a storage medium.

### BACKGROUND

One of the main problems of high-frequency communication is that signal energy decays sharply with increase of transmission distance, resulting in a short transmission distance and affecting the signal coverage of the cell. To address this issue, a beamforming technology may be used to focus energy of a wireless signal to form a directional beam, so as to increase the transmission distance, thereby enhancing the cell coverage.

Currently, beam management in millimeter wave systems, Reconfigurable Intelligent Surface (RIS), Smart Repeater and other scenarios depends on the realization of beam information exchange between nodes. Conventional beam information exchange is generally implemented through fast transmission of a small amount of beam information. A first node performs symbol-level beam management on a second node, i.e., transmits beam information on each symbol, and changes or updates the beam information on each symbol.

For transmission scenarios that do not large amounts of information, low-power communication modules may be deployed in a passive or quasi-passive manner. This means the low-power communication modules are supplied with power only in a limited period of time, or are self-sustainable through the use of a battery, solar energy, etc. However, for some low-power network elements, frequent information exchange significantly increases their power consumption, which is contrary to the goal of low power consumption. Reducing the frequency of information exchange to meet the power consumption requirements of network elements inevitably leads to an increased delay, which may not meet the transmission requirements of delay-sensitive information such as beam information. Therefore, there is a need for a beam information exchange method that offers both low power consumption and high timeliness.

### SUMMARY

Embodiments of the present disclosure provide an information transmission method, a first node, a second node, and a computer-readable storage medium, to achieve low power consumption and high timeliness of beam information exchange to a certain extent.

In accordance with a first aspect of the present disclosure, an embodiment provides an information transmission method, applied to a first node, the method including:
sending a first beam control message to a second node, where the first beam control message includes at least beam behavior information, and the beam behavior information is used for indicating a beam control behavior to be executed by the second node.

In accordance with a second aspect of the present disclosure, an embodiment provides an information transmission method, applied to a second node, the method including:
receiving a first beam control message sent by a first node, where the first beam control message includes at least beam behavior information, and the beam behavior information is used for indicating a beam control behavior to be executed; and
executing beam control according to at least the beam behavior information.

In accordance with a third aspect of the present disclosure, an embodiment provides a first node, including:
a processor and a memory,
where the memory stores program instructions which, when executed by the processor, cause the processor to carry out the information transmission method according to the first aspect.

In accordance with a fourth aspect of the present disclosure, an embodiment provides a second node, including:
a processor and a memory,
where the memory stores program instructions which, when executed by the processor, cause the processor to carry out the information transmission method according to the second aspect.

In accordance with a fifth aspect of the present disclosure, an embodiment provides a computer-readable storage medium, storing program instructions which, when executed by a computer, cause the computer to carry out the information transmission method according to the first aspect or the information transmission method according to the second aspect.

In the embodiments of the present disclosure, a first node sends a first beam control message to a second node, where the first beam control message includes at least beam behavior information, such that the second node executes corresponding beam control according to the beam behavior information in the first beam control message after receiving the first beam control message sent by the first node. Based on the technical schemes of the embodiments of the present disclosure, a beam control behavior to be executed by the second node in a period of time in the future can be indicated through a beam control message, and there is no need to perform beam updating on each symbol, such that the frequency of beam information exchange between the first node and the second node is reduced. Therefore, the problem of high power consumption caused by frequent information exchange is solved, and the overall delay in beam information exchange is reduced, thereby achieving efficient beam control.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure.
FIG. 1 is a schematic architectural diagram of a communication system to which embodiments of the present disclosure are applicable;
FIG. 2 is a schematic flowchart of an information transmission method according to an embodiment of the present disclosure;
FIG. 3a is a schematic flowchart of an information transmission method according to Example one of a first embodiment of the present disclosure;
FIG. 3b is a schematic flowchart of an information transmission method according to Example two of the first embodiment of the present disclosure;
FIG. 3c is a schematic flowchart of an information transmission method according to Example three of the first embodiment of the present disclosure;
FIG. 4 is a schematic flowchart of an information transmission method according to a second embodiment of the present disclosure;
FIG. 5 is a schematic flowchart of an information transmission method according to a third embodiment of the present disclosure;
FIG. 6 is a schematic flowchart of an information transmission method according to a fourth embodiment of the present disclosure;
FIG. 7 is a schematic flowchart of an information transmission method according to a fifth embodiment of the present disclosure;
FIG. 8 is a schematic flowchart of an information transmission method according to a sixth embodiment of the present disclosure;
FIG. 9 is a schematic architectural diagram of a communication system to which a seventh embodiment of the present disclosure is applicable;
FIG. 10 is a schematic flowchart of an information transmission method according to the seventh embodiment of the present disclosure;
FIG. 11 is a schematic structural diagram of a first node according to an embodiment of the present disclosure; and
FIG. 12 is a schematic structural diagram of a second node according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It should be understood that in the description of the embodiments of the present disclosure, the terms such as "first", "second" and the like used herein are merely used for distinguishing technical features, and are not intended to indicate or imply relative importance, or implicitly point out the number of the indicated technical features, or implicitly point out a precedence order of the indicated technical features. The term "at least one" means one or more and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. "At least one of" and similar expressions refer to any combination of items listed, including one item or any combination of a plurality of items. For example, at least one of a, b, or c may represent a, b, c, "a and b", "a and c", "b and c", or "a, b, and c", where a, b, and c may be singular or plural.

In addition, the technical features involved in various embodiments of the present disclosure described below can be combined with each other if not in collision.

One of the main problems of high-frequency communication is that the signal energy decays sharply with the increase of transmission distance, leading to a short transmission distance and affecting the signal coverage of the cell. To overcome this problem, a beamforming technology may be used to focus energy of a wireless signal to form a directional beam, so as to increase the transmission distance, thereby enhancing the cell coverage.

Beamforming includes digital beamforming and analog beamforming. Digital beamforming is implemented in digital domain. To be specific, a network node obtains channel estimation through an uplink reference signal (such as a sounding reference symbol (SRS)), and calculates a beamforming weight for downlink data channel transmission according to the channel estimation. However, this is often not sensed by the terminal side. Analog beamforming is implemented in analog domain, mainly for a millimeter wave communication system. The training of analog beams is implemented by beam scanning and beam information exchange. Because there are also analog beams in millimeter wave terminal devices, the millimeter wave terminal devices also need to participate in the beam training environment. A complete transmission of a beam control message includes a beam information exchange content and a beam information exchange mode. In addition, novel network architectures including RIS and Smart Repeater also rely on beam information exchange between nodes to realize beam management.

There are two types of conventional beam information exchange contents. A first type is beam information, which is known to both the transmit end and the receive end before being sent. A second type is resource information. The transmit end and the receive end do not agree on beam/codebook number information in advance, but only exchange the resource information, such as a Channel State Indicator Reference Signal (CSI-RS), a Resource Identifier (ID), or a Synchronization Signal and Physical Broadcast Channel (PBCH) Block (SSB) Index (SSB-Index). The transmit end and the receive end separately maintain optimal beam/codebook information corresponding to resources. This manner is used by 5G New Radio (NR) systems to perform beam information exchange.

In a 5G NR system network, a node side performs symbol-level beam control for a terminal device, i.e., beam information can be changed or updated on each symbol. To achieve symbol-level beam control, a network node needs to implement high-precision synchronization with a terminal device through an SSB, and then sends different reference signals for channel sounding. The beam control message is indicated by Quasi Co-Located (QCL) information. Transmission manners for the beam control message include: periodic sending through Radio Resource Control (RRC) configuration, semi-persistent sending through Media Access Control Control Element (MAC-CE) transmission, or aperiodic sending through Downlink Control Information (DCI) transmission. The aperiodic measurement report manner can be very flexible, but each aperiodic measurement report consumes a Physical Downlink Control Channel (PDCCH) occasion, a CSI-RS occasion, and a Physical Uplink Share Channel (PUSCH) occasion. For the periodic measurement report manner, although no PDCCH occasion is consumed, CSI-RS measurement and Physical Uplink Control Channel (PUCCH) report need to be periodically configured, leading to high resource consumption. It can be seen that both the conventional periodic and aperiodic strategies adopt a manner of fast transmission of a small amount of beam information.

The above transmission manner is applicable to conventional nodes supporting symbol-level synchronization, but some low-power nodes with low synchronization precision can hardly achieve fast and real-time beam information exchange.

For transmission scenarios not involving a large amount of information, low-power communication modules may be deployed in a passive or quasi-passive manner. In other words, the low-power communication modules are supplied with power only in a limited period of time, or are self-sustainable through the use of a battery, solar energy, etc. For some low-power network elements, frequent information exchange significantly increases their power consumption, which is contrary to the goal of low power consumption. However, reducing the frequency of information exchange to meet the power consumption requirements of network elements inevitably leads to an increased delay, which may fail to meet transmission requirements of some delay-sensitive information such as beam information. Therefore, there is a need to provide a beam information exchange method with low power consumption and high timeliness.

Embodiment of the present disclosure provide an information transmission method. In the method, a first node indicates, through a beam control message, a beam control behavior to be executed by a second node in a period of time in the future, and there is no need to perform beam updating on each symbol, such that the frequency of beam information exchange between the first node and the second node is reduced. Therefore, the problem of high power consumption caused by frequent information exchange is solved, and the overall delay in beam information exchange is reduced, thereby achieving efficient beam control.

It should be understood that the schemes of the embodiments of the present disclosure may be applied to various communication systems. A possible communication system to which embodiments of the present disclosure are applicable includes a first node, a second node, and a third node. There are beams for transmitting data respectively between the first node and the second node and between the second node and the third node. The first node may be a network node. The second node may be an RIS, a Smart Repeater, or a terminal device. The third node may be a terminal device.

Another possible communication system to which embodiments of the present disclosure are applicable may include only a first node and a second node, where the first node may be a network node and the second node may be a terminal device. It can be understood that in some cases, a user (terminal side) also has an antenna array, and both the transmit beam and the receive beam should be considered in the beam alignment process. Therefore, the user terminal device may change different receive beams for the transmit beam and select an optimal receive beam. In the embodiments of the present disclosure, the network node may instruct the terminal device to perform beam scanning, beam switching, beam updating, and other control behaviors through beam control messages.

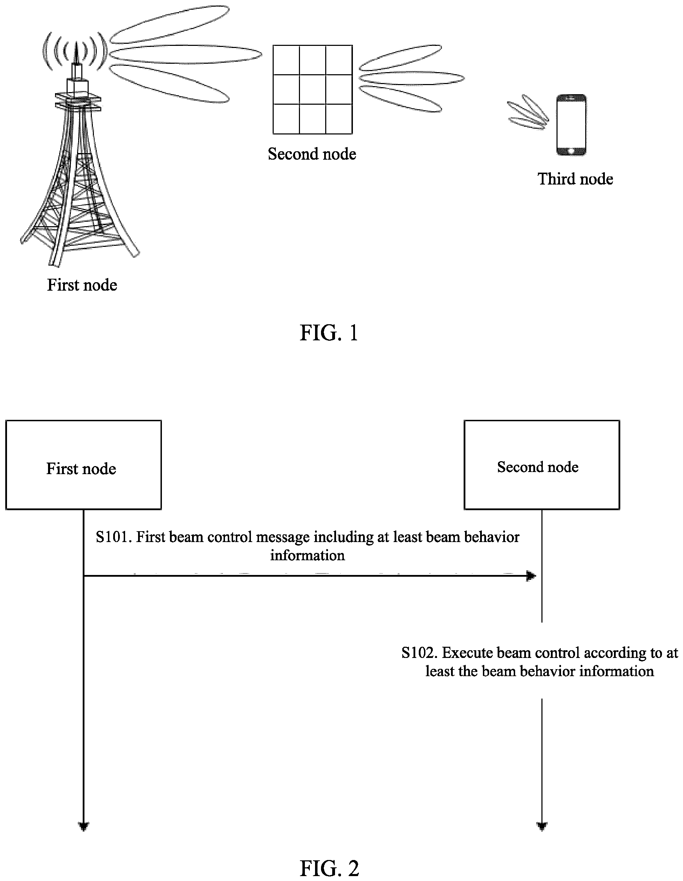

FIG. 1 is a schematic architectural diagram of a communication system to which embodiments of the present disclosure are applicable. The communication system includes a first node which is a network node, a second node which is an RIS, and a third node which is a terminal device. For convenience of description, the schemes of the embodiments of the present disclosure will be described below using the communication system shown in FIG. 1 as an example.

The network node may be a node in a Radio Access Network (RAN), and may be referred to as a base station or an RAN node (or device). For example, the network node may include an evolved Node B (NodeB, eNB, or e-NodeB) in a Long Term Evolution (LTE) system or an LTE-Advanced (LTE-A) system, such as a traditional macro base station eNB and a micro base station eNB in a heterogeneous network scenario; or may include a Next generation node B (gNB) in a 5G NR system; or may include a Transmission Reception Point (TRP), a home base station (for example, Home evolved NodeB or Home Node B (HNB)), a Base Band Unit (BBU), a BBU pool, a WiFi Access Point (AP), etc.; or may include a Centralized Unit (CU) and a Distributed Unit (DU) in a Cloud Radio Access Network (CloudRAN) system; or may include a base station in a Non-Terrestrial Network (NTN), i.e., may be deployed on a high-altitude platform or satellite. In the NTN, a network device may be used as a Layer 1 (L1) Relay, or as a base station, or as a DU, or as an Integrated Access and Backhaul (IAB) node. Alternatively, the network device may be a device that functions as a base station in an Internet of Things (IoT), e.g., a device that functions as a base station in Vehicle-to-everything (V2X), Device to Device (D2D), or Machine to Machine (M2M), which is not limited in the embodiments of the present disclosure.

The terminal device may be a user equipment, an access terminal device, a subscriber unit, a subscriber station, a mobile station, a remote station, a remote terminal device, a mobile device, a user terminal device, a terminal device, a wireless communication device, a user agent, or a user apparatus. The terminal device may also be a cellular phone, a cordless telephone, a Session Initiation Protocol (SIP) telephone, a Wireless Local Loop (WLL) station, a Personal Digital Assistant (PDA), a handheld device with a wireless communication function, a computing device or other processing device connected to a wireless modem, a vehicle-mounted device, a wearable device, a terminal device in a future 5G network, or a terminal device in a future evolved Public Land Mobile Network (PLMN), etc., which is not limited in the embodiments of the present disclosure.

The RIS is an artificial electromagnetic surface structure with programmable electromagnetic properties, which is composed of a large number of meticulously designed electromagnetic units. The electromagnetic properties of the electromagnetic units can be dynamically regulated through a control circuit, to realize the intelligent reconstruction of wireless signal propagation characteristics in a three-dimensional space, which overcomes the limitations of passive adaptation in traditional wireless environments.

The Smart Repeater can be regarded as a signal relay device deployed between the network node and the terminal device, to enhance link performance. In a downlink direction, the Smart Repeater receives information from the network node, amplifies the information, and then sends the amplified information to the terminal device; similarly for an uplink direction.

FIG. 2 is a schematic flowchart of an information transmission method according to an embodiment of the present disclosure. An implementation process of the method includes, but not limited to the following steps S101 to S102, which will be described in sequence below.

At S101, a first node sends a first beam control message to a second node.

The first beam control message includes at least beam behavior information, and the beam behavior information is used for indicating a beam control behavior to be executed by the second node, such that the second node executes corresponding beam control according to at least the beam behavior information.

In the embodiment of the present disclosure, the first node may send the first beam control message to the second node in any one of the following manners.

A first manner is broadcasting. For the broadcasting manner, the first beam control message needs to carry a node identifier (including a permanent unique identifier and a temporary unique identifier) of the second node, to distinguish beam control messages for different nodes.

A second manner is PDCCH transmission, i.e., transmitting the beam control message through a PDCCH dedicated to the second node.

A third manner is PDSCH transmission, i.e., transmitting the beam control message through a PDSCH dedicated to the second node.

A fourth manner is out-of-band transmission, including intra-system transmission (e.g., 5G NR and 4G LTE, etc.) and inter-system transmission (e.g., 5G NR and Bluetooth, etc.). This manner requires that the first node and the second node have completed basic synchronization through GPS, where the synchronization precision may reach a 100 ns level.

A fifth mode is in-band transmission. In a specific implementation, precise synchronization can be achieved using other reference signals (such as an SSB, etc.).

In the embodiment of the present disclosure, the beam control behavior includes at least one of: executing a fixed beam dwell mode, executing a beam scanning mode, or terminating a beam scanning mode.

Correspondingly, the beam behavior information may include one of:
first beam behavior information for indicating execution of a fixed beam dwell mode;
second beam behavior information for indicating execution of a beam scanning mode; or
third beam behavior information for indicating termination of a beam scanning mode.

In the embodiment of the present disclosure, the beam scanning mode includes at least one of: a fixed beam scanning mode, a wide-beam autonomous sweeping mode, a narrow-beam autonomous sweeping mode, an adjacent wide-beam autonomous sweeping mode, or an adjacent narrow-beam autonomous sweeping mode.

Correspondingly, the second beam behavior information may be one of:
fourth beam behavior information for indicating execution of the fixed beam scanning mode;
fifth beam behavior information for indicating execution of the wide-beam autonomous sweeping mode;
sixth beam behavior information for indicating execution of the narrow-beam autonomous sweeping mode;
seventh beam behavior information for indicating execution of the adjacent wide-beam autonomous sweeping mode; or
eighth beam behavior information for indicating execution of the adjacent narrow-beam autonomous sweeping mode.

It should be noted that the wide beam and the narrow beam described in the embodiments of the present disclosure are relative concepts, and can be understood as that the wide beam has a wider angle and range of coverage, but a lower gain than the narrow beam, while the narrow beam obtains a higher gain with a smaller angle and a smaller coverage area.

In an embodiment, the first beam control message further includes beam information of at least one beam, where the beam information is used for determining a beam for which the beam control behavior is to be executed. For example, the first beam control message includes the first beam behavior information for instructing the second node to execute the fixed beam dwell mode, and beam information of a single beam (e.g., beam information of a beam 1), such that after receiving the first beam control message, the second node activates the beam 1 and fixedly dwells on the beam 1. For another example, the first beam control message includes the fourth beam behavior information for instructing the second node to execute the fixed beam scanning mode, and beam information of a beam 1 to a beam N, such that after receiving the first beam control message, the second node activates the beam 1 to the beam N sequentially to implement fixed beam scanning.

In a possible implementation, the beam information includes a beam identifier. The beam identifier is a unique identifier of a beam. In an implementation, a serial number (i.e., a beam identifier) may be assigned to each beam between the first node and the second node in advance, and a mapping relationship between the number and the beam may be configured in advance in the first node and the second node. After acquiring the beam identifier from the first beam control message, the second node may parse out a to-be-activated beam according to the beam identifier.

In another possible implementation, the beam information includes beam angle information, such as a horizontal angle, a pitch angle, a horizontal width, a vertical width, a gain, and other basic information of the beam. After acquiring the beam angle information from the first beam control message, the second node may find an optimal matching beam from a local preset beam set, to obtain the to-be-activated beam.

In still another possible implementation, the beam information includes codebook information, and the codebook information includes amplitude and phase information of each array element of the second node. After acquiring the complete codebook information of the beam from the first beam control message, the second node may directly activate the codebook in an RF device.

It should be noted that the physical meaning of beam or codebook not only can represent geometrically identical beams (including a wide beam, a narrow beam, a single beam, a plurality of beams, a far beam, and a near beam), but also can represent a modal codebook set, an anisotropic beam, etc.

In some other possible implementations, the beam information may further include antenna module information, multi-beam information, anisotropic beam information, etc.

It can be understood by those having ordinary skills in the art that the beam information may include one or more of a beam identifier, beam angle information, codebook information, antenna module information, multi-beam information, or anisotropic beam information, which is not limited in the embodiments of the present disclosure.

In an embodiment, the first beam control message further includes beam activation time information, and the beam activation time information is used for indicating an activation time of a beam for which the beam control behavior is to be executed. For example, the beam activation time information includes at least one of: an absolute time of beam activation, an absolute time of beam deactivation, a repetition period of beam activation, a repetition period of beam deactivation, a relative time interval of beam activation, or a relative time interval of beam deactivation.

In a possible implementation, to describe the absolute time of beam activation and the absolute time of beam deactivation, the beam activation time information includes the absolute time of beam activation and the absolute time of beam deactivation. The absolute time may be measured in symbols, slots, frames, milliseconds, seconds, etc., or a combination thereof.

In an implementation, the absolute time of beam activation or the absolute time of beam deactivation may not be configured. If the absolute time of beam activation is not configured, the beam may be activated immediately or according to a default delay. If the absolute time of beam deactivation is not configured, the current beam may be kept activated until a next beam control message carrying new beam behavior information is received.

In an implementation, a corresponding repetition period may also be configured for an activation time or a deactivation time of each beam. When a repetition period condition is satisfied after an absolute time of activation of a beam begins, the beam is activated again. When a repetition period condition is satisfied after an absolute time of deactivation of a beam begins, the beam is deactivated again.

In a possible implementation, to describe the relative time interval of activation of each beam and the relative time interval of deactivation of each beam in the beam scanning mode, the beam activation time information includes the relative time interval of the beam activation and the relative time interval of beam deactivation. It should be understood that the relative time interval is defined as that: starting from a moment at which the second node receives the first beam control message sent by the first node, a beam corresponding to the beam information is activated after a delay of the relative time interval of activation, and the beam is deactivated after the relative time interval of deactivation is reached. The relative time interval may be measured in symbols, slots, frames, milliseconds, seconds, etc., or a combination thereof.

It can be understood that in an implementation, the beam activation time information may be any combination of the absolute time of beam activation, the absolute time of beam deactivation, the repetition period of beam activation, the repetition period of beam deactivation, the relative time interval of beam activation, or the relative time interval of beam deactivation. For example, the beam activation time information may include an absolute time of activation of each beam and a relative time interval of deactivation of each beam, or may include a relative time interval of activation of each beam and an absolute time of activation of each beam.

It can be understood that for systems of different standards in the out-of-band transmission manner and the activation time measured in slots, a subcarrier spacing needs to be additionally configured for time alignment.

It can be understood that in an implementation, if an activation time of a given beam is configured to be earlier than a deactivation time of a previous beam of the given beam, the activation time of the given beam prevails, and the previous beam is deactivated ahead of time.

In an embodiment, the first beam control message further includes the node identifier of the second node. When the first node sends the first beam control message to the second node by broadcasting, the node identifier of the second node needs to be added in the first beam control message, such that the second node can distinguish the first beam control message sent to the second node.

In an embodiment, the first beam control message further includes a to-be-controlled beam quantity for indicating a quantity of beams for which the beam control behavior is to be executed. For example, when the first beam control message includes the fourth beam behavior information (indicating execution of the fixed beam scanning mode) and the beam information of the beam 1 to the beam N, the first beam control message further includes a to-be-controlled beam quantity N for indicating that the fixed beam scanning mode is to be executed for N beams.

At S102, the second node receives the first beam control message sent by the first node and executes beam control according to at least the beam behavior information.

For example, the first beam control message sent by the first node includes the first beam behavior information (indicating execution of the fixed beam dwell mode) and beam information of a single beam (for example, the beam 1). In this case, after receiving the first beam control message, the second node parses the beam information to obtain the beam 1, activates the beam 1 based on a default delay and according to the first beam behavior information, and fixedly dwells on the beam 1.

For example, the first beam control message sent by the first node includes the fourth beam behavior information (indicating execution of the fixed beam scanning mode), beam information of a plurality of beams (e.g., the beams 1, 2, and 3), and a relative time interval of activation of each beam. After receiving the first beam control message, the second node parses the beam information to obtain the beams 1, 2, and 3, and then activates or deactivates the beams 1, 2, and 3 sequentially according to the relative time interval of activation of each beam, to implement a fixed beam scanning operation.

For example, the first beam control message sent by the first node includes the fifth or sixth beam behavior information (indicating execution of the wide-beam or narrow-beam autonomous sweeping mode). In this case, after receiving the first beam control message, the second node autonomously scans wide beams or narrow beams in turn. In the process of scanning the wide beams or narrow beams in turn, if the first beam control message further carries the beam activation time information, each beam is activated or deactivated according to the beam activation time information; or if the first beam control message does not carry the beam activation time information, each beam is activated or deactivated according to a preset default relative time interval of beam activation.

For example, the first beam control message sent by the first node includes the seventh or eighth beam behavior information (indicating execution of the adjacent wide-beam or narrow-beam autonomous sweeping mode). After receiving the first beam control message, the second node autonomously determines adjacent wide beams or narrow beams, and then autonomously scans the adjacent wide beams or narrow beams in turn. In the process of scanning the adjacent wide beams or narrow beams in turn, if the first beam control message further carries the beam activation time information, each beam is activated or deactivated according to the beam activation time information; or if the first beam control message does not carry the beam activation time information, each beam is activated or deactivated according to a preset default relative time interval of beam activation.

For example, the first beam control message sent by the first node includes the third beam behavior information (indicating termination of the beam scanning mode). After receiving the first beam control message, the second node terminates the current beam scanning mode to cause beams to enter an inactivated state.

It can be understood that causing beams to enter the inactivated state may be achieved in the following manners. In a first manner, the second node stops sending a signal of any power. In a second manner, the second node performs sending using an invalid beam (codebook with phases being all 0 or all 1 or codebook with amplitude being 0). In a third manner, the second node performs sending using a default beam, which is known to the first node and the second node.

It can be understood that the method of the embodiment of the present disclosure further includes: After sending the first beam control message to the second node, the first node further receives a success or failure message fed back by the second node according to the first beam control message, where the success or failure message is used for informing the first node whether the first beam control message has been correctly received by the second node.

Generally speaking, the beam control message indicating the execution of the fixed beam dwell mode further includes beam information of a beam and activation time information corresponding to the beam. After receiving the beam control message, the second node activates and deactivates the beam indicated by the beam information according to the given beam activation time information. If the beam control message does not include the corresponding beam activation time information, the beam is activated immediately or according to a default delay, and the beam remains activated until a next beam control message carrying new beam behavior information is received. In the fixed beam dwell mode, it is not desirable to configure the to-be-controlled beam quantity to be more than one and configure beam information and activation time information of more than one beam.

Generally speaking, the beam control message indicating the execution of the fixed beam scanning mode further includes beam information of a plurality of beams and activation time information corresponding to each beam. After receiving the beam control message, the second node updates the beams sequentially according to a sequence of serial numbers of the beams. An activation time of each beam is consistent with that indicated in the corresponding activation time information (including the absolute time of activation or deactivation or the relative time interval of activation or deactivation). Here, the activation time information corresponding to each beam is optional. If the beam control message does not carry activation time information of a beam, beam scanning may be performed according to a default relative time interval of beam activation.

Generally speaking, the beam control message indicating the execution of the wide-beam or narrow-beam autonomous sweeping mode may further include activation time information of a single beam, which describes, for example, a relative time interval of activation of each beam and a relative time interval of deactivation of each beam. Of course, in an implementation, the beam control message indicating the execution of the wide-beam or narrow-beam autonomous sweeping mode may not include activation time information of a single beam, but only carry status information indicating execution or termination. The second node determines a beam activation time by itself and reports current beam information after receiving terminating information. The application is no longer limited to cases where the beam behavior information is the wide-beam autonomous sweeping mode, the narrow-beam autonomous sweeping mode, or the adjacent narrow-beam autonomous sweeping mode.

It should also be understood that in the wide-beam or narrow-beam autonomous sweeping mode, the beam control message does not need to additionally indicate the to-be-controlled beam quantity and the beam information. The wide-beam or narrow-beam autonomous sweeping mode includes two states, i.e., a started state and a terminated state. After receiving the beam control message indicating the execution of the wide-beam or narrow-beam autonomous sweeping mode, the second node autonomously scans the wide beams or narrow beams in turn. After receiving the beam control message indicating termination of the scanning mode, the second node terminates the current autonomous sweeping process. When the second node has already started autonomous sweeping and has not received terminating information, if the second node receives new information indicating the execution of the wide-beam or narrow-beam autonomous sweeping mode, the second node terminates the current autonomous sweeping process and executes a new autonomous sweeping process according to the above information.

It should also be understood that when the second node has already started autonomous sweeping and has not received terminating information, if the second node receives new information indicating execution of the fixed beam dwell or scanning mode, the second node terminates the current autonomous sweeping process and execute the fixed beam dwell or scanning mode according to the above information. When the second node currently has not started autonomous sweeping, if the second node receives new information indicating termination of the wide-beam or narrow-beam autonomous sweeping mode, the second node ignores the information. In a case where the current beam behavior information indicates execution of an autonomous sweeping mode, the second node needs to feed back current beam information after receiving an indication of terminating the scanning, where the content of the beam information is consistent with the content of the beam information in the beam control message described above.

Generally speaking, the beam control message indicating the execution of the adjacent wide-beam or narrow-beam autonomous sweeping mode does not need to carry the to-be-controlled beam quantity and the beam information. The adjacent wide-beam or narrow-beam autonomous sweeping mode includes two states, i.e., a started state and a terminated state. After receiving information indicating execution of the adjacent wide-beam or narrow-beam autonomous sweeping mode, the second node autonomously scans adjacent wide beams or narrow beams (determined by the second node autonomously) in turn. After receiving information indicating termination of the scanning mode, the second node terminates the current autonomous sweeping process. When the second node has already started autonomous sweeping and has not received terminating information, if the second node receives new information indicating the execution of the adjacent wide-beam or narrow-beam autonomous sweeping mode, the second node terminates the current autonomous sweeping process and executes a new autonomous sweeping process according to the above information. When the second node has already started autonomous sweeping and has not received terminating information, if the second node receives new information indicating execution of the fixed beam dwell or scanning mode, the second node terminates the current autonomous sweeping process and execute the fixed beam dwell or scanning mode according to the above information. When the second node currently has not started autonomous sweeping, if the second node receives new information indicating termination of the adjacent wide-beam or narrow-beam autonomous sweeping mode, the second node ignores the information. In a case where the current beam behavior information indicates execution of an autonomous sweeping mode, the second node needs to feed back current beam information after receiving an indication of terminating the scanning, where the content of the beam information is consistent with the content of the beam information in the beam control message described above.

For a better understanding of the schemes provided in the embodiments of the present disclosure, several embodiments are described below.

### First Embodiment

It can be understood that based on the schemes of the embodiments of the present disclosure, a first node can directly control a second node to perform beam switching, beam scanning, and beam scanning feedback.

### Example one

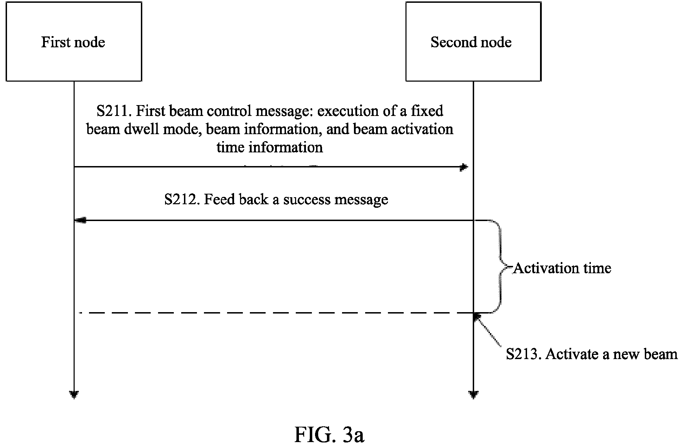

FIG. 3a is a schematic flowchart of an information transmission method according to Example one of a first embodiment of the present disclosure. The method includes the following steps S211 to S213.

At S211, a first node sends a first beam control message to a second node, where the first beam control message includes first beam behavior information (indicating execution of a fixed beam dwell mode), beam information of a single beam (e.g., beam information of a beam 1), and beam activation time information.

For example, the beam information of the single beam may be a beam identifier (unique identifier of the beam 1); or angle information of the beam 1 (e.g., horizontal 30° and vertical 5°); or codebook information of the beam 1 (including phase and amplitude information of corresponding array elements); or a modal codebook set number of the beam 1.

For example, the beam activation time information may include an absolute time of beam activation, e.g., system frame number SFN=1, slot number slotNum=0, symbol number symbolNum=13; or include a relative time interval of beam activation, e.g., slot offset slotOffset=2, symbolNum=13.

At S212, after receiving the first beam control message sent by the first node, the second node feeds back a success message to the first node.

At S213, the second node activates a new beam (i.e., the beam 1) according to the beam activation time information.

In this embodiment, after receiving the first beam control message, an RIS (i.e., the second node) returns a feedback to indicate whether the message has been received successfully. If the feedback indicates that the message has not been received successfully, a base station (i.e., the first node) initiates a retransmission until the transmission is successful or a maximum quantity of retransmissions is reached. If the feedback indicates that the message has been received successfully, the RIS activates the beam indicated by the beam information according to a given absolute time of beam activation or relative time interval of beam activation. In this way, the control of beam switching of the RIS by the base station is realized.

### Example two

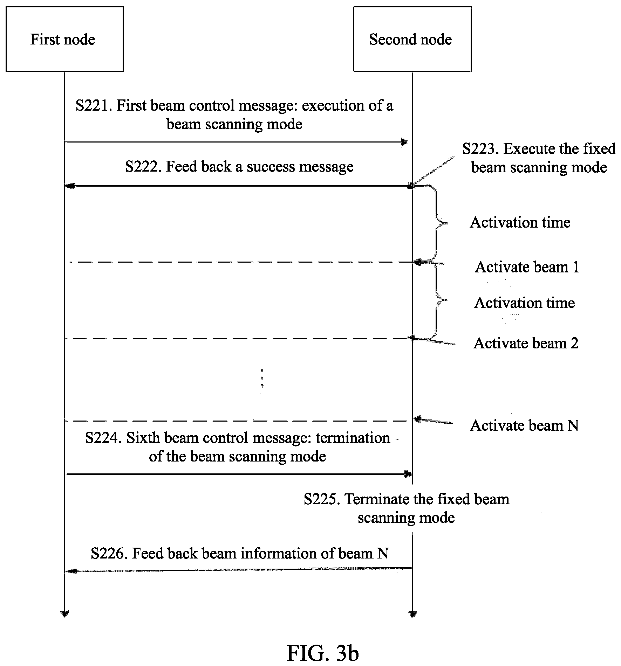

FIG. 3b is a schematic flowchart of an information transmission method according to Example two of the first embodiment of the present disclosure. The method includes the following steps S221 to S226.

At S221, a first node sends a first beam control message to a second node, where the first beam control message includes second beam behavior information (indicating execution of a beam scanning mode) and beam activation time information.

At S222, after receiving the first beam control message sent by the first node, the second node feeds back a success message to the first node.

At S223, the second node executes the beam scanning mode according to the beam activation time information.

At S224, the first node sends a sixth beam control message (indicating termination of the beam scanning mode) to the second node during execution of the beam scanning mode by the second node.

At S225, the second node terminates the beam scanning mode according to the sixth beam control message.

At S226, the second node feeds back beam information of a current activated beam (i.e., a beam N) to the first node.

For example, a base station sends a beam control message to an RIS, where the message carries an activation time of a single beam and beam behavior information (e.g., a wide-beam or narrow-beam autonomous sweeping mode). After receiving the beam control message and feeding back a success message, the RIS autonomously selects and activates a beam according to a given absolute time of beam activation or relative time interval of beam activation. The beam remains activated until the base station sends a new beam control message carrying beam behavior information (indicating termination of the beam scanning mode) to the RIS. At this moment, the RIS needs to feed back beam information of a current activated beam to the base station. In this way, a process of autonomous beam scanning feedback from the RIS to the base station is realized. The autonomous sweeping mode may include a wide-beam autonomous sweeping mode, a narrow-beam autonomous sweeping mode, an adjacent wide-beam autonomous sweeping mode or an adjacent narrow-beam autonomous sweeping mode. A wide beam has a large coverage but low gain, and a narrow beam has a small coverage but high gain. The specific autonomous sweeping mode depends on the current actual scenario. The RIS does not need to parse a reference signal delivered by the base station side, but reports the current beam information according to termination information sent by the base station side.

### Example three

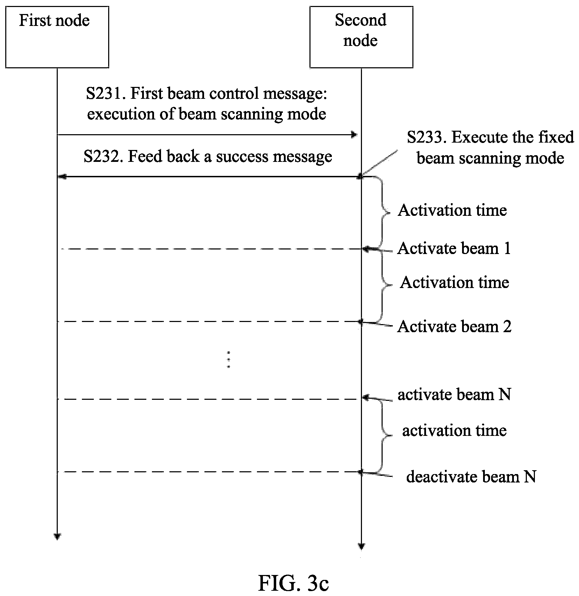

FIG. 3c is a schematic flowchart of an information transmission method according to Example two of the first embodiment of the present disclosure. The method includes the following steps S231 to S233.

At S231, a first node sends a first beam control message to a second node, where the first beam control message includes second beam behavior information (indicating execution of a beam scanning mode) and beam activation time information.

At S232, after receiving the first beam control message sent by the first node, the second node feeds back a success message to the first node.

At S233, the second node executes the beam scanning mode according to the beam activation time information, until scanning of all beams is completed.

For example, a base station sends a beam control message to an RIS, where the message carries multi-beam information (including a set of enumerated values: unique beam identifier A, unique beam identifier B, and unique beam identifier C), an absolute time of beam activation (including a set of enumerated values: {SFN=1, slotNum=0, symbolNum=13}, {SFN=1, slotNum=1, symbolNum=13}, and {SFN=1, slotNum=2, symbolNum=13}), and beam behavior information (indicating execution of a fixed beam scanning mode). After receiving the beam control message and feeding back a success message, the RIS activates beams indicated by the beam information sequentially according to the given absolute time of beam activation in the activation time information. In this way, the control of beam scanning of the RIS by the base station is realized.

Alternatively, a base station sends a beam control message to an RIS, where the message carries multi-beam information (including unique beam identifiers 1 to 10), an absolute time of beam activation (including a set of enumerated values: {SFN=1, slotNum=0, symbolNum=13}, {SFN=1, slotNum=1, symbolNum=13}, and {SFN=1, slotNum=2, symbolNum=13}), and beam behavior information (indicating execution of a fixed beam scanning mode). After receiving the beam control message and feeding back a success message, the RIS activates beams indicated by the beam information sequentially according to the given absolute time of beam activation in the activation time information. Based on this, the control of beam scanning of the RIS by the base station is realized.

Alternatively, a base station sends a beam control message to an RIS, where the message carries multi-beam information (including a set of enumerated values: unique beam identifier A, unique beam identifier B, and unique beam identifier C), an absolute time of beam activation (including a set of enumerated values: {slotOffset=1, symbolNum=13}, {slotOffset=2, symbolNum=13}, {slotOffset=3, symbolNum=13}), and beam behavior information (indicating execution of a fixed beam scanning mode). After receiving the beam control message and feeding back a success message, the RIS activates beams indicated by the beam information sequentially according to the given absolute time of beam activation in the activation time information. Based on this, the control of beam scanning of the RIS by the base station is realized.

### Second Embodiment

It can be understood that based on the schemes of the embodiments of the present disclosure, a first node can implement static beam control for a second node, including static beam configuration of a common channel (e.g., a broadcast channel or an uplink/downlink common reference signal).

In a scenario involving only a base station and an RIS, the base station may perform beam control on a common channel for the RIS, for subsequent receiving or forwarding of the common channel by the RIS.

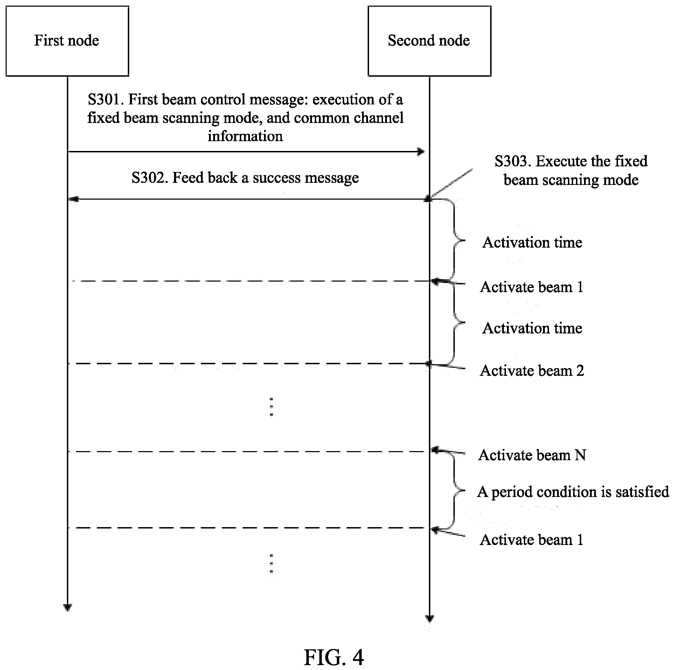

FIG. 4 is a schematic flowchart of an information transmission method according to a second embodiment of the present disclosure. The method includes the following steps S301 to S303.

At S301, a first node sends a first beam control message to a second node, where the first beam control message includes beam behavior information and common channel information, and the common channel information is used for instructing the second node to execute beam control on a channel corresponding to the common channel information.

The common channel information includes, but not limited to, an SSB, a Tracking Reference Signal (TRS), and a Physical Random Access Channel (PRACH).

The first beam control message in this embodiment includes: fourth beam behavior information (indicating execution of a fixed beam scanning mode), common channel information (SSB, TRS, PRACH, etc.), beam information of a plurality of beams (e.g., beams 1 to N) corresponding to the channel indicated by the common channel information, an absolute time of activation of each beam, an absolute time of deactivation of each beam, a repetition period of beam activation, and a repetition period of beam deactivation.

At S302, after receiving the first beam control message sent by the first node, the second node feeds back a success message to the first node.

At S303, the second node executes fixed beam scanning of the beam 1 to the beam N on the channel corresponding to the common channel information.

It can be understood that in this embodiment, the RIS sequentially activates the beam 1 to the beam N indicated by the beam information according to the given absolute time of beam activation in the beam activation time information. When a repetition period condition is satisfied after the absolute time of beam activation begins, the beam 1 to the beam N are sequentially activated. When a repetition period condition is satisfied after the absolute time of beam deactivation begins, the beam 1 to the beam N are sequentially deactivated. In this way, the control or configuration of a common channel beam (such as an SSB beam, a TRS beam, or a PRACH beam) of the RIS by the base station is realized.

In an implementation, a single beam control message may be used to carry information of a single beam of a single common channel, and an activation time domain position and an activation period of the beam; or a single beam control message may be used to carry activation time domain positions and activation periods of a plurality of beams of a single common channel; or a single beam control message may be used to carry information of a plurality of beams of a plurality of common channels, and activation time domain positions and activation periods of the beams.

### Third Embodiment

In a scenario involving a base station, an RIS, and a terminal device, if beam information of one or more common channels of the terminal device changes, it is necessary to perform beam control on a common channel for the RIS, for subsequent receiving or forwarding of the common channel over a new beam by the RIS.

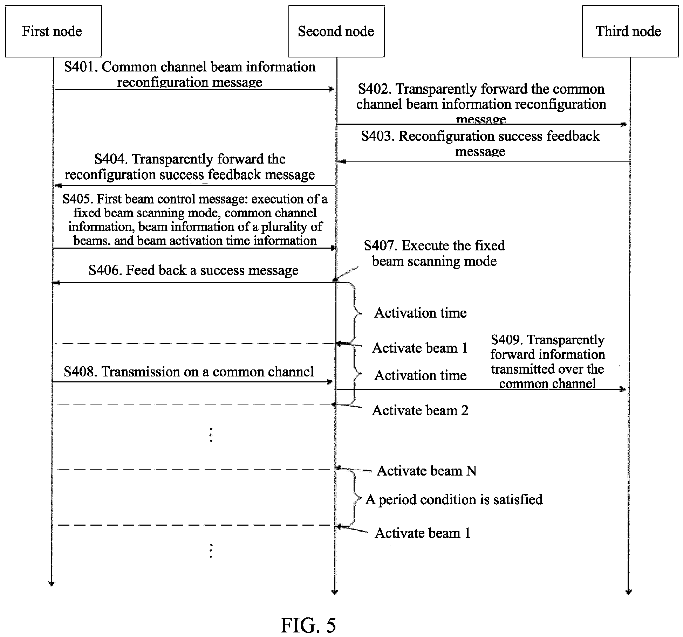

FIG. 5 is a schematic flowchart of an information transmission method according to a third embodiment of the present disclosure. The method includes the following steps S401 to S409.

At S401, a first node sends a common channel beam information reconfiguration message to a second node.

At S402, the second node transparently forwards the common channel beam information reconfiguration message to a third node.

At S403, the third node sends a reconfiguration success feedback message to the second node.

At S404, the second node transparently forwards the reconfiguration success feedback message to the first node.

At S405, the first node sends a first beam control message to the second node, where the first beam control message includes fourth beam behavior information (indicating execution of a fixed beam scanning mode), common channel information, beam information of a plurality of beams, and beam activation time information.

At S406, after receiving the first beam control message sent by the first node, the second node feeds back a success message to the first node.

At S407, the second node executes fixed beam scanning of a beam 1 to a beam N on a channel corresponding to the common channel information.

At S408, during execution of the fixed beam scanning mode by the second node, the first node performs transmission with the second node on a common channel by utilizing a current activated beam.

At S409, the second node transparently forwards information transmitted by the common channel to the third node.

It can be understood that after the base station and the RIS have completed the basic beam control message exchange shown in FIG. 4, when the base station finds that beam information of one or more common channels has changed, the base station sends a common channel beam information reconfiguration message to the RIS, and the RIS transparently forwards the common channel beam information reconfiguration message directly to the terminal device. After receiving the message, the terminal device feeds back a reconfiguration success message to the RIS, and the RIS transparently forwards the reconfiguration success message directly to the base station. After receiving the reconfiguration success message and determining that a time interval or an absolute time of activation of a new beam of the RIS is satisfied, the base station sends a beam control message to the RIS, where the message carries multi-beam information, beam activation time information, and beam behavior information (indicating execution of the fixed beam scanning mode). After receiving the beam control message and feeding back a success message, the RIS sequentially activates the corresponding beams in the multi-beam information according to the given absolute time or relative time interval of beam activation. After activation of the beam and before deactivation of the beam, the base station performs transmission on a common channel by utilizing the new beam, and the RIS transparently forwards information transmitted by the common channel directly to the terminal device. When a repetition period condition is satisfied after the absolute time of beam activation begins, the new beam is activated again. When a repetition period condition is satisfied after the absolute time of beam deactivation begins, the new beam is deactivated again. In this way, a process of updating a common channel beam of the RIS by base station is realized.

### Fourth Embodiment

It can be understood that based on the schemes of the embodiments of the present disclosure, a third node accesses a first node through a second node, and the third node implements a complete initial access process through the second node, including initial synchronization and beam capture.

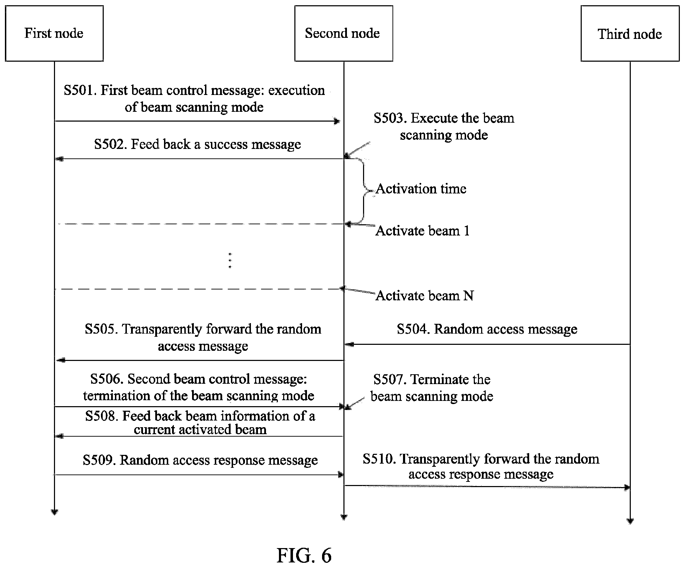

FIG. 6 is a schematic flowchart of an information transmission method according to a fourth embodiment of the present disclosure. The method includes the following steps S501 to S510.

At S501, a first node sends a first beam control message to a second node, where the first beam control message includes second beam behavior information (indicating execution of a beam scanning mode).

It should be noted that this embodiment is applicable to a fixed beam scanning mode, a wide-beam autonomous sweeping mode, a narrow-beam autonomous sweeping mode, an adjacent wide-beam autonomous sweeping mode, or an adjacent narrow-beam autonomous sweeping mode, depending on the current actual scenario.

At S502, after receiving the first beam control message sent by the first node, the second node feeds back a success message to the first node.

At S503, the second node executes the beam scanning mode.

At S504, a third node sends a random access message (Msg1) to the second node. In this embodiment, the third node sends Msg1 to the second node over a common channel PRACH by utilizing an N^{th} beam.

At S505, during execution of the beam scanning mode, the second node receives the random access message sent by the third node and transparently forwards the random access message (Msg1) to the first node.

At S506, the first node receives, from the second node, the random access message from the third node, and sends a second beam control message to the second node according to the random access message, where the second beam control message includes third beam behavior information (indicating termination of the beam scanning mode), such that the second node terminates the beam scanning mode.

At S507, the second node terminates the beam scanning mode according to the second beam control message.

At S508, the second node sends beam information of a current activated beam (the N^{th} beam) to the first node.

At S509, the first node sends a random access response message to the second node according to the beam information of the current activated beam from the second node.

At S510, the second node transparently forwards the random access response message (Msg2) to the third node.

For example, a base station sends a beam control message to an RIS, where the message carries fifth or sixth beam behavior information (indicating execution of a wide-beam or narrow-beam autonomous sweeping mode). After receiving the beam control message and feeding back a success message, the RIS autonomously selects and activates a wide beam according to a given absolute time of beam activation or relative time interval of beam activation. After the absolute time or relative time interval of activation of the new beam is satisfied, the RIS autonomously performs beam updating. The terminal device initiates a random access process one or more times, and sends Msg1 on a PRACH channel, and the RIS transparently forwards the Msg1 directly to the base station. After receiving the Msg1, the base station sends a beam control message to the RIS, where the message carries third beam behavior information (indicating termination of the wide-beam or narrow-beam autonomous sweeping mode). After receiving the beam control message, the RIS feeds back beam information of a current activated beam to the base station. After receiving the beam information, the base station sends Msg2 to complete the subsequent access process. In this way, a complete beam scanning control process for the terminal device to access the base station through the RIS is realized.

### Fifth Embodiment

It can be understood that a third node accesses a first node through a second node, and when the third node is in a connected mode, beam control message exchange between the second node and the first node is realized, including optimal beam training and beam switching.

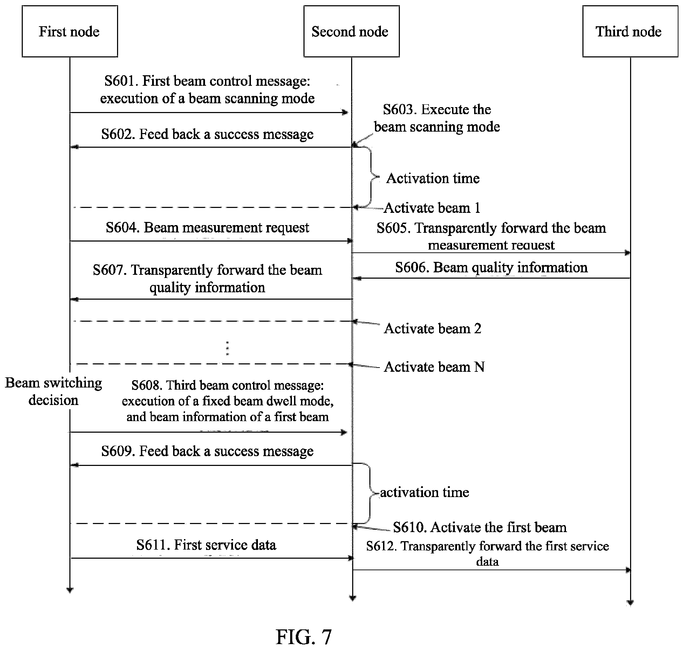

FIG. 7 is a schematic flowchart of an information transmission method according to a fifth embodiment of the present disclosure. The method includes the following steps S601 to S612.

At S601, a first node sends a first beam control message to a second node, where the first beam control message includes second beam behavior information (indicating execution of a beam scanning mode).

It should be noted that this embodiment is applicable to a fixed beam scanning mode, a wide-beam autonomous sweeping mode, a narrow-beam autonomous sweeping mode, an adjacent wide-beam autonomous sweeping mode, or an adjacent narrow-beam autonomous sweeping mode, depending on the current actual scenario.

At S602, after receiving the first beam control message sent by the first node, the second node feeds back a success message to the first node.

At S603, the second node executes the beam scanning mode.

At S604, the first node sends a beam measurement request to the second node during execution of the beam scanning mode by the second node.

At S605, the second node receives the beam measurement request sent by the first node and transparently forwards the beam measurement request to a third node.

At S606, the third node performs beam measurement according to the beam measurement request, and reports beam quality information to the second node, where the beam quality information is obtained by measuring a current activated beam of the second node by the third node.

At S607, the second node receives the beam quality information sent by the third node and transparently forwards the beam quality information to the first node.

At S608, the first node sends a third beam control message to the second node according to the beam quality information, where the third beam control message includes first beam behavior information and beam information of a first beam.

At S609, after receiving the third beam control message sent by the first node, the second node feeds back a success message to the first node.

At S610, the second node executes a fixed beam dwell mode according to the third beam control message to activate the first beam.

At S611, the first node sends first service data to the second node.

At S612, the second node transparently forwards the first service data from the first node to the third node by utilizing the first beam.

It should be noted that the first beam control message in step S610 may alternatively carry first beam behavior information (indicating execution of the fixed beam dwell mode). To be specific, during execution of the fixed beam dwell mode by the second node, the first node sends a beam measurement request to the second node, and then performs subsequent steps.

In an example scenario, a terminal device accesses a base station through an RIS, and when the location of the terminal device changes due to movement or the environment changes, a beam of the RIS may need to be changed, such that the center of the beam points to and is aligned with the terminal device, thereby achieving a maximum gain. Therefore, the base station needs to perform multi-beam scanning control for the RIS and make a beam switching decision according to beam quality information of different beams, and send a beam switching control message to the RIS. For example, after a period or event triggering condition is satisfied, the base station sends a beam control message to the RIS, where the message carries multi-beam information, beam activation time information, and beam behavior information indicating execution of the fixed beam scanning mode. In an implementation, the base station may determine beams to be measured according to its own policy. After receiving the beam control message and feeding back a success message, the RIS sequentially activates the corresponding beams according to the given absolute time or relative time interval of beam activation. After activation of a beam and before deactivation of the beam, the base station sends a downlink beam measurement request to the RIS, and the RIS transparently forwards the downlink beam measurement request to the terminal device. After measuring the beam, the terminal device reports beam quality information to the RIS, and the RIS transparently forwards the beam quality information to the base station. After all the beams are activated and deactivated, the base station makes a beam switching decision according to all the beam quality information received. After finding a better beam on the RIS side, the base station sends a beam control message to the RIS again, where the message carries beam information of a single beam, beam activation time information, and beam behavior information indicating execution of a fixed beam dwell mode. After receiving a success message fed back by the RIS, the base station sends service data to the RIS, and the RIS transparently forwards the service data directly to the terminal device by utilizing the new beam. In this way, a beam training and beam switching process by the RIS for the terminal device is completed.

In another example scenario, a terminal device accesses a base station through an RIS, and when the terminal device is moving rapidly or the environment changes dramatically, a beam of the RIS may need to be changed or even frequently changed, such that the center of the beam points to and is aligned with the terminal device, thereby achieving terminal device tracking. Therefore, the base station needs to perform autonomous beam scanning control for the RIS, and make a beam switching decision according to beam quality information of different beams, and send a beam switching control message to the RIS. Different from the former scenario, the beam control information does not carry explicit beam information, but instead, the RIS autonomously selects and quickly scans adjacent beams, and after the base station finds an optimal beam, informs the base station through feedback. In this way, the content of the beam control information can be reduced, and higher efficiency is achieved because the RIS can autonomously selects beams to be measured.

For example, after a period or event triggering condition is satisfied, the base station sends a beam control message to the RIS, where the message carries beam behavior information indicating execution of an autonomous beam sweeping mode (which may be a wide-beam or narrow-beam autonomous sweeping mode or an adjacent wide-beam or narrow-beam autonomous sweeping mode depending on an actual scenario). In an implementation, the base station may determine beams to be measured according to its own policy. After receiving the beam control message and feeding back a success message, the RIS sequentially activates the corresponding beams according to the given absolute time or relative time interval of beam activation. After activation of a beam and before deactivation of the beam, the base station sends a downlink beam measurement request to the RIS, and the RIS transparently forwards the downlink beam measurement request to the terminal device. After measuring the beam, the terminal device reports beam quality information to the RIS, and the RIS transparently forwards the beam quality information to the base station. After all the beams are activated and deactivated, the base station makes a beam switching decision according to all the beam quality information received. After finding a better beam on the RIS side, the base station sends a beam control message to the RIS, where the message carries beam behavior information indicating termination of the beam scanning mode. After receiving a success message fed back by the RIS, the base station sends downlink service data to the RIS, and the RIS transparently forwards the downlink service data directly to the terminal device by utilizing the new beam. In this way, a beam training and beam switching process by the RIS for the terminal device is completed.

### Sixth Embodiment

It can be understood that a third node accesses a first node through a second node, and based on the schemes of the embodiments of the present disclosure, beam control information exchange between the second node and the first node when the third node is in a beam failure state can be realized, including beam failure detection and beam recovery.

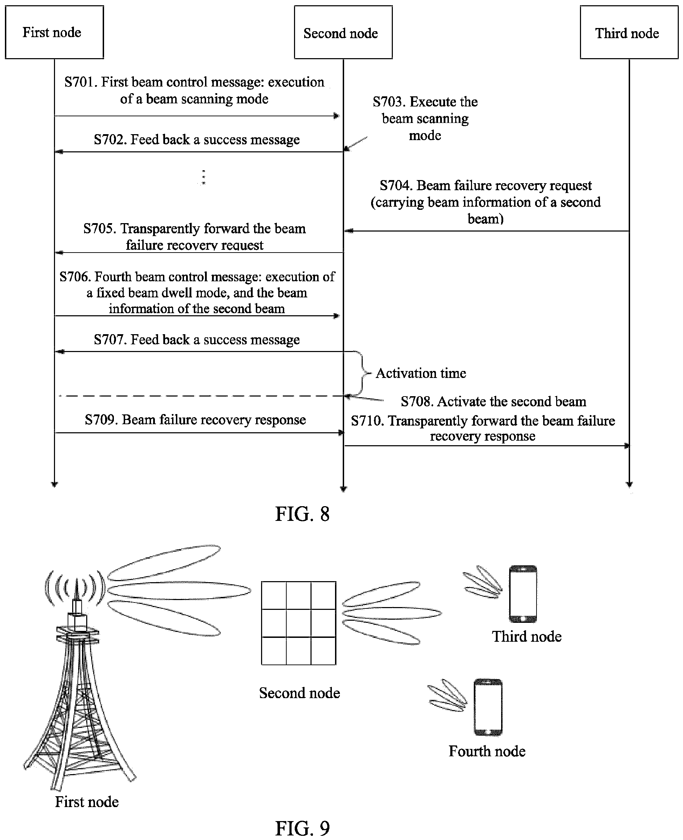

FIG. 8 is a schematic flowchart of an information transmission method according to a sixth embodiment of the present disclosure. The method includes the following steps S701 to S710.

At S701, a first node sends a first beam control message to a second node, where the first beam control message includes second beam behavior information (indicating execution of a beam scanning mode).

It should be noted that this embodiment is applicable to a fixed beam scanning mode, a wide-beam autonomous sweeping mode, a narrow-beam autonomous sweeping mode, an adjacent wide-beam autonomous sweeping mode, or an adjacent narrow-beam autonomous sweeping mode, depending on the current actual scenario.

At S702, after receiving the first beam control message sent by the first node, the second node feeds back a success message to the first node.

At S703, the second node executes the beam scanning mode.

At S704, a third node sends a beam failure recovery request to the second node during execution of the beam scanning mode by the second node.

At S705, the second node transparently forwards the beam failure recovery request to the first node after receiving the beam failure recovery request from the third node, where the beam failure recovery request includes beam information of a second beam, and the second beam is a beam that the third node requests to recover.

At S706, the first node receives, from the second node, the beam failure recovery request from the third node, and sends a fourth beam control message to the second node according to the beam failure recovery request, where the fourth beam control message includes first beam behavior information (indicating execution of a fixed beam dwell mode) and the beam information of the second beam.

At S707, after receiving the fourth beam control message sent by the first node according to the beam failure recovery request, the second node feeds back a success message to the first node.

At S708, the second node executes the fixed beam dwell mode according to the fourth beam control message to activate the second beam.

At S709, after receiving the success message fed back by the second node, the first node sends a beam failure recovery response to the second node according to the success message.

At S710, the second node receives the beam failure recovery response sent by the first node according to the success message, and transparently forwards the beam failure recovery response to the third node.

In an example scenario of this embodiment, a terminal device accesses a base station through an RIS, and when the base station side finds that current link quality deteriorates sharply, the base station side instructs the RIS to start an autonomous beam sweeping process. At the same time, the terminal device finds in the process of beam failure detection that the current beam fails, and initiates a beam recovery process. The base station needs to perform beam control on the RIS, such that the terminal device can implement a complete beam recovery process.

When the base station finds that the link quality from the RIS to the terminal device deteriorates significantly (for example, a Block Error Rate (BLER) of a PDSCH channel or PDCCH channel continues to be high), the base station sends a beam control message to the RIS, where the message carries activation time information of a single beam and beam behavior information (indicating execution of a wide-beam or narrow-beam autonomous round-sweep mode). After receiving the beam control message and feeding back a success message, the RIS autonomously selects and activates a beam according to a given absolute time of beam activation or relative time interval of beam activation in the activation time information.

After detecting that the current beam fails and finding a better beam, the terminal device sends a beam failure recovery request (carried by a PRACH channel) to the RIS, and the RIS transparently forwards the beam failure recovery request directly to the base station. After receiving the request, the base station parses out the corresponding beam information, and sends a beam control message to the RIS, where the message carries beam information of a single beam, beam activation time information, and beam behavior information (indicating execution of a fixed beam dwell mode). After receiving the message, the RIS feeds back a success message to the base station, and activates the beam indicated by the beam information according to a given absolute time of beam activation or relative time interval of beam activation in the beam activation time information. After receiving the success message and determining that a relative time interval or an absolute time of activation of a new beam of the RIS is satisfied, the base station sends a beam failure recovery response to the RIS, and the RIS transparently forwards the beam failure recovery response directly to the terminal device. After receiving the response, the terminal device returns a feedback to the RIS in response to the recovery response message, and the RIS transparently forwards the feedback directly to the base station. After receiving the feedback, the base station sends a beam information reconfiguration message to the RIS through a MAC-CE or the like, and the RIS transparently forwards the beam information reconfiguration message directly to the terminal device. In this way, a complete beam failure recovery process is realized.

### Seventh Embodiment

It can be understood that a plurality of user terminal devices access a network element through a node, and based on the schemes of the embodiments of the present disclosure, beam control information exchange between the second node and the first node when the plurality of users are in a connected mode can be realized, including management and scheduling of beams of the plurality of users.

FIG. 9 is a schematic architectural diagram of a communication system to which embodiments of the present disclosure are applicable. For example, the communication system includes a first node which is a base station, a second node which is an RIS, and a third node and a fourth node which are terminal devices. The third node corresponds to a user A, and the fourth node corresponds to a user B.

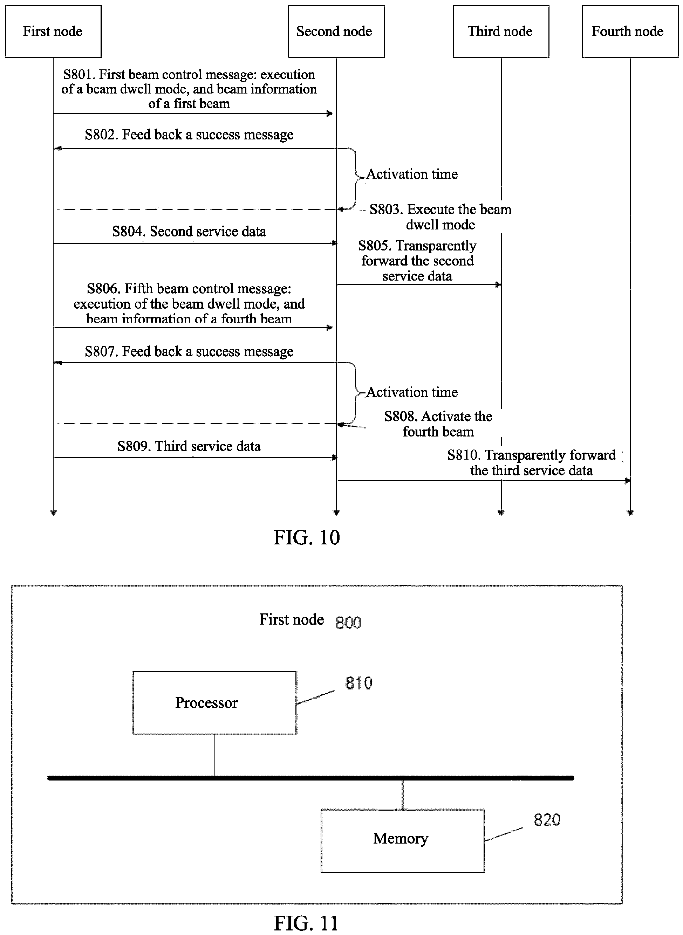

FIG. 10 is a schematic flowchart of an information transmission method according to the seventh embodiment of the present disclosure. The method includes the following steps S801 to S810.

At S801, the first node sends a first beam control message to the second node, where the first beam control message includes first beam behavior information and beam information of a third beam.

At S802, after receiving the first beam control message sent by the first node, the second node feeds back a success message to the first node.

At S803, the second node executes a fixed beam dwell mode according to the first beam control message to activate the third beam.

At S804, the first node sends second service data to the second node.

At S805, the second node transparently forwards the second service data to the third node through the third beam.

At S806, the first node sends a fifth beam control message to the second node, where the fifth beam control message includes the first beam behavior information and beam information of a fourth beam, and the fourth beam is a beam to be switched to.

At S807, after receiving the fifth beam control message sent by the first node, the second node feeds back a success message to the first node.

At S808, the second node executes the fixed beam dwell mode according to the fifth beam control message to activate the fourth beam.

At S809, the first node sends third service data to the second node.

At S810, the second node transparently forwards the third service data to a fourth node through the fourth beam.

In an example scenario of this embodiment, the base station sends a beam control message to the RIS, where the message carries beam information of a single beam, beam activation time information, and beam behavior information (indicating execution of a fixed beam dwell mode). After receiving the message, the RIS feeds back a success message to the base station, and activates the beam indicated by the beam information according to a given absolute time of beam activation or relative time interval of beam activation. After receiving the success message and determining that a relative time interval or an absolute time of activation of a new beam of the RIS is satisfied, the base station schedules service channel data for the user A, which is directly and transparently forwarded by the RIS to the user A. After determining that the absolute time or relative time interval of activation of the new beam of the RIS is satisfied, the base station stops scheduling service channel data for the user A. The base station sends a beam control message to the RIS, where the message carries beam information of a single beam, beam activation time information, and beam behavior information (indicating execution of the fixed beam dwell mode). After receiving the information, the RIS feeds back a success message to the base station, and activates the beam indicated by the beam information according to a given absolute time of beam activation or relative time interval of beam activation. After receiving the success message and determining that a relative time interval or an absolute time of activation of a new beam of the RIS is satisfied, the base station schedules service channel data for the user B, which is directly and transparently forwarded by the RIS to the user B. After determining that the absolute time or relative time interval of activation of the new beam of the RIS is satisfied, the base station stops scheduling service channel data for the user B. In an implementation, the same process may be performed for other user terminal devices, such that dynamic scheduling of a plurality of user terminal devices can be realized through beam control of the RIS.

The base station may transmit beam information and an activation time of one terminal device through a single beam control message, or may transmit beam information and activation times of a plurality of terminal devices through a single beam control message. When a plurality of terminal devices satisfy the same beam information of the RIS, the terminal devices may be dynamically scheduled together using a time division/frequency division policy.

The schemes of the embodiments of the present disclosure describe a process for exchanging a beam control message between a first node and a second node, where the beam control message includes at least beam behavior information, and optionally includes a unique identifier of the second node, a to-be-controlled beam quantity, beam information, beam activation time information, and beam behavior information. The beam information includes a beam identifier, beam absolute time information, beam codebook information, or the like. The beam activation time information includes an absolute time or a relative time interval of activation of each beam, and a repetition period, etc. The beam behavior information includes: executing a fixed beam dwell mode, executing a fixed multi-beam scanning mode, executing a wide-beam or narrow-beam autonomous sweeping mode, executing an adjacent wide-beam or narrow-beam autonomous sweeping mode, and terminating a beam scanning mode.

An objective of the embodiments of the present disclosure is to transmit as many valid beam control messages as possible during one information exchange process between the first node and the second node. Beam update behaviors to be executed in a period of time, beam information, duration, etc., are described in a single beam control message transmission. The present disclosure is applicable to various communication scenarios involving non-symbol-level synchronization or information exchange, is insensitive to the delay of a single transmission, and improves the information transmission efficiency by reducing the information exchange frequency, thereby reducing the overall communication delay to a certain extent and reducing the power consumption.

It should be noted that although the operations in the embodiments of the present disclosure are described in a particular order in the drawings, it should not be construed as requiring that these operations be performed in a particular or serial order as shown, or that all of the illustrated operations be performed to achieve a desired result. In a particular environment, multitasking and parallel processing may be advantageous.

In addition, in the embodiments of the present disclosure, the description in each embodiment has its own focus. For parts that are not detailed or set forth in an embodiment, reference may be made to the relevant descriptions in other embodiments.

An embodiment of the present disclosure provides a first node. As shown in FIG. 11, the first node 800 includes, but not limited to,
a processor 810 and a memory 820.

The memory 820 stores program instructions which, when executed by the processor 810, cause the processor 810 to carry out the information transmission method executed by a first node side according to any one of the embodiments of the present disclosure.

The processor 810 and the memory 820 may be connected by a bus or in other ways.

It can be understood that the processor 810 may be a Central Processing Unit (CPU). The processor may also be other general-purpose processor, a Digital Signal Processor (DSP), an Application-Specific Integrated Circuit (ASIC), a Field Programmable Gate Array (FPGA), or other programmable logic device, discrete gate or transistor logic device, discrete hardware component, or the like. The general-purpose processor may be a microprocessor or any conventional processor or the like. Alternatively, the processor 810 uses one or more integrated circuits for executing related programs to implement the technical schemes provided in the embodiments of the present disclosure.

The memory 820, as a non-transitory computer-readable storage medium, may be configured for storing a non-transitory software program and a non-transitory computer-executable program, for example, the information transmission method executed by a first node side according to any one of the embodiments of the present disclosure. The processor 810 runs the non-transitory software program and the non-transitory computer-executable program stored in the memory 820, to implement the information transmission method executed by the first node side.

The memory 820 may include a program storage area and a data storage area. The program storage area may store an operating system, and an application required by at least one function. The data storage area may store data and the like required for executing the information transmission method executed by the first node side. In addition, the memory 820 may include a high-speed random access memory, and may also include a non-transitory memory, e.g., at least one magnetic disk storage device, flash memory device, or other non-transitory solid-state storage device. In some implementations, the memory 820 optionally includes memories located remotely from the processor 810, and the remote memories may be connected to the processor 810 via a network. Examples of the network include, but not limited to, the Internet, an intranet, a local area network, a mobile communication network, and combinations thereof.

The non-transitory software program and instruction required to implement the information transmission method executed by the first node side are stored in the memory 820 which, when executed by one or more processors 810, cause the one or more processors 810 to implement the information transmission method executed by the first node side according to any one of the embodiments of the present disclosure.

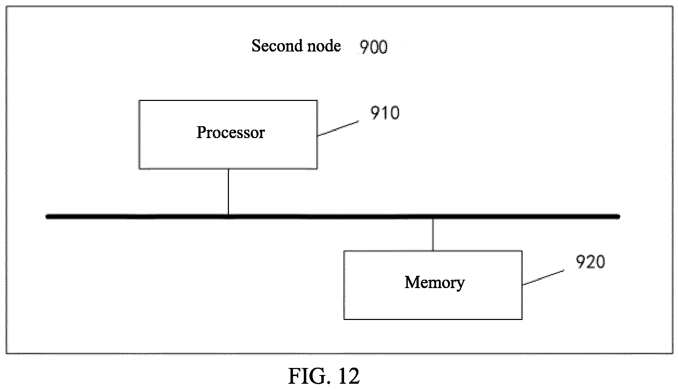

An embodiment of the present disclosure provides a second node. As shown in FIG. 12, the second node 900 includes, but not limited to,
a processor 910 and a memory 920.

The memory 920 stores program instructions which, when executed by the processor 910, cause the processor 910 to carry out the information transmission method executed by a second node side according to any one of the embodiments of the present disclosure.

The processor 910 and the memory 920 may be connected by a bus or in other ways.

It can be understood that the processor 910 may be a CPU. The processor may also be other general-purpose processor, a DSP, an ASIC, an FPGA, or other programmable logic device, discrete gate or transistor logic device, discrete hardware component, or the like. The general-purpose processor may be a microprocessor or any conventional processor or the like. Alternatively, the processor 910 uses one or more integrated circuits for executing related programs to implement the technical schemes provided in the embodiments of the present disclosure.

The memory 920, as a non-transitory computer-readable storage medium, may be configured for storing a non-transitory software program and a non-transitory computer-executable program, for example, the information transmission method executed by the second node side according to any one of the embodiments of the present disclosure. The processor 910 runs the non-transitory software program and the non-transitory computer-executable program stored in the memory 920, to implement the information transmission method executed by the second node side.

The memory 920 may include a program storage area and a data storage area. The program storage area may store an operating system, and an application required by at least one function. The data storage area may store data and the like required for executing the information transmission method executed by the second node side. In addition, the memory 920 may include a high-speed random access memory, and may also include a non-transitory memory, e.g., at least one magnetic disk storage device, flash memory device, or other non-transitory solid-state storage device. In some implementations, the memory 920 optionally includes memories located remotely from the processor 910, and the remote memories may be connected to the processor 910 via a network. Examples of the network include, but not limited to, the Internet, an intranet, a local area network, a mobile communication network, and combinations thereof.

The non-transitory software program and instruction required to implement the information transmission method executed by the second node side are stored in the memory 920 which, when executed by one or more processors 910, cause the one or more processors 910 to implement the information transmission method executed by the second node side according to any one of the embodiments of the present disclosure.

An embodiment of the present disclosure provides a computer-readable storage medium, storing program instructions which, when executed by a computer, cause the computer to carry out the information transmission method executed by the second node side according to any one of the embodiments of the present disclosure.

The computer-readable storage medium in the embodiment of the present disclosure may be any combination of one or more computer-readable media. The computer-readable medium may be a computer-readable signal medium or a computer-readable storage medium. For example, the computer-readable storage medium may include, but not limited to, an electrical, magnetic, optical, electromagnetic, infrared, or semiconductor system, apparatus, or device, or any combination thereof. Specific examples (non-exclusive list) of the computer-readable storage medium include: an electrical connection having one or more wires, a portable computer disk, a hard disk, a Random Access Memory (RAM), a Read-Only Memory (ROM), an erasable programmable Read-Only Memory (EPROM), a flash memory, an optical fiber, a portable Compact Disc Read-Only Memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device.

The computer-readable signal medium may include a data signal propagated in a baseband or as part of a carrier. The data signal carries computer-readable program code. Such a propagated data signal may be in a variety of forms including, but not limited to, an electromagnetic signal, an optical signal, or any suitable combination thereof. The computer-readable signal medium may also be any computer-readable medium other than a computer-readable storage medium, and may send, propagate, or transmit a program for use by or in combination with an instruction execution system, apparatus, or device.

The program code contained on the computer-readable medium may be transmitted using any suitable medium, including but not limited to, via wireless transmission, via a wire, via a fiber optic cable, via Radio Frequency (RF), etc., or any suitable combination thereof.

Computer program code for executing the operations of the present disclosure may be compiled in one or more programming languages or a combination of programming languages, including object-oriented programming languages such as Java, Smalltalk, and C++, and conventional procedural programming languages such as the "C" language or similar programming languages. The program code can be entirely executed on a user's computer, partly executed on the user's computer, executed as a separate software package, partly executed on the user's computer and partly executed on a remote computer, or entirely executed on a remote computer or server. In cases involving a remote computer, the remote computer may be connected to the user's computer via any type of network, including a Local Area Network (LAN) or a Wide Area Network (WAN), or may be connected to an external computer (e.g., via an Internet service provided by an Internet service provider).

It should be noted that although the operations in the embodiments of the present disclosure are described in a particular order in the drawings, it should not be construed as requiring that these operations be performed in a particular or serial order as shown, or that all of the illustrated operations be performed to achieve a desired result. In a particular environment, multitasking and parallel processing may be advantageous.

In addition, in the embodiments of the present disclosure, the description in each embodiment has its own focus. For parts that are not detailed or set forth in one embodiment, reference may be made to the relevant descriptions in other embodiments.

Although some embodiments of the present disclosure have been described above, the present disclosure is not limited to the implementations described above. Those having ordinary skills in the art can make various equivalent modifications or replacements without departing from the essence of the present disclosure. Such equivalent modifications or replacements fall within the scope defined by the claims of the present disclosure.

## Claims

1. An information transmission method, applied to a first node, the method comprising:
sending a first beam control message to a second node, wherein the first beam control message comprises at least beam behavior information, and the beam behavior information is used for indicating a beam control behavior to be executed by the second node.

2. The method of claim 1, wherein the beam behavior information comprises one of:
first beam behavior information for indicating execution of a fixed beam dwell mode;
second beam behavior information for indicating execution of a beam scanning mode; or
third beam behavior information for indicating termination of a beam scanning mode.

3. The method of claim 2, wherein the beam scanning mode comprises at least one of: a fixed beam scanning mode, a wide-beam autonomous sweeping mode, a narrow-beam autonomous sweeping mode, an adjacent wide-beam autonomous sweeping mode, or an adjacent narrow-beam autonomous sweeping mode.

4. The method of any of claims 1 to 3, wherein the first beam control message further comprises beam information of at least one beam, wherein the beam information is used for determining a beam for which the beam control behavior is to be executed; and
the beam information comprises at least one of: a beam identifier, beam angle information, codebook information, antenna module information, multi-beam information, or anisotropic beam information.

5. The method of any of claims 1 to 3, wherein the first beam control message further comprises beam activation time information, and the beam activation time information is used for indicating an activation time of a beam for which the beam control behavior is to be executed; and
the beam activation time information comprises at least one of: an absolute time of beam activation, an absolute time of beam deactivation, a repetition period of beam activation, a repetition period of beam deactivation, a relative time interval of beam activation, or a relative time interval of beam deactivation.

6. The method of any of claims 1 to 3, wherein sending a first beam control message to a second node is performed in any one of the following manners:
broadcasting;
Physical Downlink Control Channel (PDCCH) transmission;
Physical Downlink Shared Channel (PDSCH) transmission;
out-of-band transmission; or
in-band transmission.

7. The method of claim 2, wherein in response to the first beam control message comprising the second beam behavior information, the method further comprises:
receiving, from the second node, a random access message from a third node;
sending a second beam control message to the second node according to the random access message, wherein the second beam control message comprises the third beam behavior information, such that the second node terminates the beam scanning mode;
receiving beam information of a current activated beam sent by the second node; and
sending a random access response message to the second node according to the beam information of the current activated beam, such that the second node transparently forwards the random access response message to the third node.

8. The method of claim 2, wherein in response to the first beam control message comprising the first beam behavior information or the second beam behavior information, the method further comprises:
sending a beam measurement request to the second node, such that the second node transparently forwards the beam measurement request to the third node;
receiving, from the second node, beam quality information from the third node, wherein the beam quality information is obtained by measuring a current activated beam of the second node by the third node;
sending a third beam control message to the second node according to the beam quality information, wherein the third beam control message comprises the first beam behavior information and beam information of a first beam, such that the second node executes the fixed beam dwell mode, and activates the first beam at the second node; and
sending first service data to the second node, such that the second node transparently forwards the first service data to the third node through the first beam.

9. The method of claim 2, further comprising:
receiving, from the second node, a beam failure recovery request from a third node during execution of the beam scanning mode by the second node, wherein the beam failure recovery request comprises beam information of a second beam, and the second beam is a beam which the third node requests to recover;
sending a fourth beam control message to the second node according to the beam failure recovery request, wherein the fourth beam control message comprises the first beam behavior information and beam information of the second beam, such that the second node executes the fixed beam dwell mode, and activates the second beam at the second node;
receiving a success message fed back by the second node; and
sending a beam failure recovery response to the second node according to the success message, such that the second node transparently forwards the beam failure recovery response to the third node.

10. The method of claim 2, wherein in response to the first beam control message comprising the first beam behavior information and beam information of a third beam, the method further comprises:
sending second service data to the second node, such that the second node transparently forwards the second service data to a third node through the third beam;
sending a fifth beam control message to the second node, wherein the fifth beam control message comprises the first beam behavior information and beam information of a fourth beam, and the fourth beam is a beam to be switched to, such that the second node executes the fixed beam dwell mode, and activates the fourth beam at the second node; and
sending third service data to the second node, such that the second node transparently forwards the third service data to a fourth node through the fourth beam.

11. The method of claim 1, wherein the first beam control message further comprises common channel information, and the common channel information is used for instructing the second node to execute the beam control behavior on a channel corresponding to the common channel information.

12. An information transmission method, applied to a second node, the method comprising:
receiving a first beam control message sent by a first node, wherein the first beam control message comprises at least beam behavior information, and the beam behavior information is used for indicating a beam control behavior to be executed; and
executing beam control according to at least the beam behavior information.

13. The method of claim 12, wherein the beam behavior information comprises one of:
first beam behavior information for indicating execution of a fixed beam dwell mode;
second beam behavior information for indicating execution of a beam scanning mode; or
third beam behavior information for indicating termination of a beam scanning mode.

14. The method of claim 13, wherein the beam scanning mode comprises at least one of: a fixed beam scanning mode, a wide-beam autonomous sweeping mode, a narrow-beam autonomous sweeping mode, an adjacent wide-beam autonomous sweeping mode, or an adjacent narrow-beam autonomous sweeping mode.

15. The method of claim 12 or 13, wherein the first beam control message further comprises beam information of at least one beam, and the beam information is used for determining a beam for which the beam control behavior is to be executed; and
the beam information comprises at least one of: a beam identifier, beam angle information, codebook information, antenna module information, multi-beam information, or anisotropic beam information.

16. The method of claim 12 or 13, wherein the first beam control message further comprises beam activation time information, and the beam activation time information is used for indicating an activation time of a beam for which the beam control behavior is to be executed; and
the beam activation time information comprises at least one of: an absolute time of beam activation, an absolute time of beam deactivation, a repetition period of beam activation, a repetition period of beam deactivation, a relative time interval of beam activation, or a relative time interval of beam deactivation.

17. The method of claim 13, wherein in response to the first beam control message comprising the second beam behavior information, the method further comprises:
during execution of the beam scanning mode, receiving a random access message sent by a third node and transparently forwarding the random access message to the first node;
receiving a second beam control message sent by the first node according to the random access message, wherein the second beam control message comprises the third beam behavior information;
terminating the beam scanning mode according to the second beam control message;
sending beam information of a current activated beam to the first node; and
receiving a random access response message sent by the first node according to the beam information of the current activated beam, and transparently forwarding the random access response message to the third node.

18. The method of claim 13, wherein in response to the first beam control message comprising the first beam behavior information or the second beam behavior information, the method further comprises:
during execution of the fixed beam dwell mode or the beam scanning mode, receiving a beam measurement request sent by the first node and transparently forwarding the beam measurement request to a third node;
receiving beam quality information sent by the third node according to the beam measurement request, wherein the beam quality information is obtained by measuring a current activated beam of the second node by the third node;
transparently forwarding the beam quality information to the first node;
receiving a third beam control message sent by the first node according to the beam quality information, wherein the third beam control message comprises the first beam behavior information and beam information of a first beam;
executing the fixed beam dwell mode according to the third beam control message to activate the first beam; and
transparently forwarding first service data from the first node to the third node through the first beam.

19. The method of claim 13, further comprising:
during execution of the beam scanning mode, receiving a beam failure recovery request sent by a third node, and transparently forwarding the beam failure recovery request to the first node, wherein the beam failure recovery request comprises beam information of a second beam, and the second beam is a beam which the third node requests to recover;
receiving a fourth beam control message sent by the first node according to the beam failure recovery request, wherein the fourth beam control message comprises the first beam behavior information and the beam information of the second beam;
executing the fixed beam dwell mode according to the fourth beam control message to activate the second beam;
feeding back a success message to the first node; and
receiving a beam failure recovery response sent by the first node according to the success message, and transparently forwarding the beam failure recovery response to the third node.

20. The method of claim 13, wherein in response to the first beam control message comprising the first beam behavior information and beam information of a third beam, the method further comprises:
during execution of the fixed beam dwell mode, transparently forwarding second service data from the first node to a third node through the third beam;
receiving a fifth beam control message sent by the first node, wherein the fifth beam control message comprises the first beam behavior information and beam information of a fourth beam, and the fourth beam is a beam to be switched to;
executing the fixed beam dwell mode according to the fifth beam control message to activate the fourth beam; and
transparently forwarding third service data from the first node to a fourth node through the fourth beam.

21. The method of claim 12, wherein the first beam control message further comprises common channel information, and the common channel information is used for instructing to execute the beam control on a channel corresponding to the common channel information.

22. A first node, comprising:
a processor and a memory,
the memory storing program instructions which, when executed by the processor, cause the processor to carry out the method of any of claims 1 to 11.

23. A second node, comprising:
a processor and a memory,
the memory storing program instructions which, when executed by the processor, cause the processor to perform the method of any of claims 12 to 21.

24. A computer-readable storage medium, storing program instructions which, when executed by a computer, cause the computer to carry out the method of any of claims 1 to 11, or the method of any of claims 12 to 21.
